# FASCICULE DE BREVET EUROPEEN

(11) **EP 3 201 091 B1**
(45) Date de publication et mention de la délivrance du brevet: **12.06.2019**
(21) Numéro de dépôt: 15787001.5
(22) Date de dépôt: 02.10.2015
(51) Int. Cl.: B64G 1/28, B64G 1/32, B64G 1/44

(54) **PROCÉDÉ DE CONTRÔLE D'ATTITUDE D'UN SATELLITE EN MODE SURVIE, SATELLITE ADAPTÉ ET PROCÉDÉ DE COMMANDE À DISTANCE D'UN TEL SATELLITE**
VERFAHREN ZUR ÜBERWACHUNG DER LAGE EINES SATELLITEN IN ÜBERLEBENSMODUS, ANGEPASSTE SATELLIT UND VERFAHREN ZUR FERNSTEUERUNG SOLCH EINES SATELLITEN
METHOD OF SUPERVISING ATTITUDE OF A SATELLITE IN SURVIVAL MODE, ADAPTED SATELLITE AND METHOD OF REMOTELY CONTROLLING SUCH A SATELLITE

(30) Priorité: 02.10.2014 FR 1459420
(43) Date de publication de la demande: 09.08.2017
(73) Titulaire: Airbus Defence and Space SAS, 31402 Toulouse Cedex 4 (FR); Centre National d'Etudes Spatiales (CNES), 75001 Paris (FR)
(72) Inventeur: LASNET, Dorian, F-31402 Toulouse Cedex 4 (FR); GIRAUD, Emmanuel, F-31402 Toulouse Cedex 4 (FR); CAMARES, Hervé, F-31402 Toulouse Cedex 4 (FR)
(74) Mandataire: Ipside
(86) Numéro de dépôt international: PCT/FR2015/052654
(87) Numéro de publication internationale: WO 2016/051113

(56) Documents cités:
- EP-A1- 2 181 923
- WO-A1-2013/041575
- CA-A1- 2 057 720
- FR-A1- 2 659 061
- FR-A1- 2 742 243
- FR-A1- 2 809 502
- FR-A1- 2 994 287

## Description

### DOMAINE TECHNIQUE

La présente invention appartient au domaine du contrôle d'attitude de satellites en orbite géocentrique, et concerne plus particulièrement le contrôle d'attitude de satellites en mode survie en orbite basse inclinée.

### ÉTAT DE LA TECHNIQUE

Dans la présente demande, on entend par « mode survie » tout mode de contrôle d'attitude d'un satellite visant, à partir d'un état initial perturbé, à assurer un ensoleillement des générateurs solaires qui soit suffisant pour garantir l'autonomie électrique d'une plateforme dudit satellite jusqu'à son rétablissement dans un état proche des conditions opérationnelles nominales.

Ainsi, le mode survie peut être mis en oeuvre immédiatement après séparation du lanceur et/ou, après que la mission du satellite a débuté, en cas d'incident quelconque nécessitant d'interrompre la mission (collision avec une météorite, défaillance d'un propulseur, etc.).

Pour un satellite en mode survie en orbite basse, équipé à la fois de magnéto-coupleurs et de volants d'inertie, il est connu de la demande de brevet FR 2809502 A1 de contrôler l'attitude selon un mode dit « boussole ».

Par effet boussole, un satellite va naturellement s'orienter de sorte à aligner un moment magnétique interne, formé au moyen des magnéto-coupleurs, avec le champ magnétique terrestre local. La position angulaire du satellite autour du moment magnétique interne peut être contrôlée au moyen d'un moment cinétique interne formé par les volants d'inertie. Dans le mode boussole, le moment magnétique interne à former est déterminé de sorte à assurer qu'une consigne de pointage du satellite, en direction du Soleil, est respectée lorsque le moment magnétique interne formé est aligné avec le champ magnétique terrestre local. Le champ magnétique terrestre local, en repère inertiel, dépend de la position du satellite par rapport à la Terre, et varie donc au cours du temps à mesure que ledit satellite se déplace sur son orbite. Par conséquent, le moment magnétique interne, à former pour respecter la consigne de pointage du satellite, varie également au cours du temps à mesure que le satellite se déplace sur son orbite. Dans la demande de brevet FR 2809502 A1, le moment magnétique interne à former est calculé à partir d'un modèle de champ magnétique terrestre, d'informations de contexte (notamment la position du satellite par rapport à la Terre) et de la consigne de pointage du satellite.

La demande de brevet FR 2994287 A1 décrit également un mode de survie dans lequel des magnéto-coupleurs sont commandés pour contrôler l'attitude du satellite, par effet boussole, afin de respecter une consigne de pointage vers le Soleil. Comme dans la demande de brevet FR 2809502 A1, le moment magnétique interne à former dépend du champ magnétique terrestre local, et est calculé à partir d'informations de contexte (direction du Soleil, champ magnétique terrestre local) et de la consigne de pointage du satellite.

Un inconvénient des procédés de contrôle d'attitude de satellite en mode survie selon l'art antérieur réside dans l'utilisation de nombreuses informations (informations de contexte, consigne de pointage), alors même qu'il ne peut généralement pas être garanti que toutes ces informations seront disponibles en mode survie. Par exemple, les informations de contexte ne sont pas disponibles si le ou les senseurs associés sont défaillants, et la consigne de pointage n'est pas disponible si elle est obtenue d'une station sol et que la communication associée a été interrompue.

### EXPOSÉ DE L'INVENTION

La présente invention a pour objectif de remédier à tout ou partie des limitations des solutions de l'art antérieur, notamment celles exposées ci-avant, en proposant un contrôle d'attitude en mode survie qui nécessite un nombre limité de senseurs et d'actionneurs.

En outre, la présente invention a également pour objectif de proposer une solution qui soit compatible avec tout type d'orbite basse inclinée, en particulier les orbites non héliosynchrones, dites « dérivantes ».

A cet effet, et selon un premier aspect, la présente invention concerne un procédé de contrôle d'attitude d'un satellite en mode survie en orbite basse inclinée, le satellite comportant un générateur solaire, un magnéto-coupleur et un volant d'inertie, caractérisé en ce que ledit procédé comporte :
- une étape, préalable au mode survie, de mémorisation d'une consigne de moment magnétique interne non nul constant dans un repère satellite lié au satellite, dit « moment magnétique de survie », et d'une consigne de moment cinétique interne non nul constant dans ledit repère satellite, dit « moment cinétique de survie », le moment magnétique de survie et le moment cinétique de survie étant prédéfinis de sorte à assurer qu'une surface photosensible du générateur solaire est ensoleillée au moins une fois au cours d'une orbite du satellite,
- une étape de commande du magnéto-coupleur et du volant d'inertie de sorte à former simultanément le moment magnétique de survie et le moment cinétique de survie pendant une partie au moins du mode survie.

Le procédé de contrôle d'attitude en mode survie est donc particulièrement simple et robuste, dans la mesure où il ne met en oeuvre que des actionneurs inertiels, en l'occurrence un ou plusieurs magnéto-coupleurs et un ou plusieurs volants d'inertie. En outre, ces actionneurs inertiels sont mis en oeuvre pour former respectivement un moment magnétique de survie et un moment cinétique de survie. Le moment magnétique de survie et le moment cinétique de survie, tous deux non nuls, sont en outre constants en repère satellite, de sorte qu'ils peuvent être formés indépendamment de toute information de contexte. Le moment magnétique de survie et le moment cinétique de survie sont donc avantageusement déterminés et mémorisés dans une mémoire du satellite avant que ledit satellite n'entre en mode survie.

En formant le moment magnétique de survie, non nul et constant au cours du temps en repère satellite, la direction du champ magnétique terrestre local tend également, par effet boussole, à être constante au cours du temps en repère satellite, quelle que soit la position du satellite sur son orbite basse inclinée. Par conséquent, le moment magnétique de survie permet de fixer, par effet boussole, l'attitude du satellite suivant deux axes par rapport au champ magnétique terrestre local. La position angulaire dudit satellite autour du moment magnétique de survie, c'est-à-dire l'attitude dudit satellite suivant le troisième axe, est imposée par le moment cinétique de survie. En effet, le satellite va naturellement s'orienter de sorte à avoir le moment cinétique de survie orthogonal au plan de l'orbite du satellite.

En appliquant le procédé de contrôle d'attitude en mode survie selon l'invention, l'attitude du satellite varie en repère inertiel avec les variations du champ magnétique local, mais est néanmoins contrôlée suivant trois axes par rapport au champ magnétique terrestre local. Il est donc possible de choisir, en fonction de l'orbite du satellite et de la géométrie dudit satellite (en particulier, l'agencement du générateur solaire dans le repère satellite) un moment magnétique de survie et un moment cinétique de survie qui permettent d'assurer que la surface photosensible du générateur solaire est ensoleillée au moins une fois par orbite du satellite. De préférence, le moment magnétique de survie et le moment cinétique de survie sont prédéterminés de sorte à maximiser l'ensoleillement moyen de ladite surface photosensible au cours d'une orbite du satellite.

Dans des modes particuliers de mise en oeuvre, le procédé de contrôle d'attitude en mode survie peut comporter en outre l'une ou plusieurs des caractéristiques suivantes, prises isolément ou selon toutes les combinaisons techniquement possibles.

Dans des modes particuliers de mise en oeuvre, le satellite comportant plusieurs magnéto-coupleurs et un dispositif de mesure du champ magnétique terrestre local, ledit procédé comporte des étapes de :
- détermination, en fonction de mesures du champ magnétique terrestre local, d'un moment magnétique interne, dit « moment magnétique d'amortissement », à former pour appliquer un couple magnétique sur ledit satellite qui s'oppose aux variations du champ magnétique terrestre local dans le repère satellite,
- commande des magnéto-coupleurs de sorte à ajouter le moment magnétique d'amortissement au moment magnétique de survie.

En effet, en mode survie (après séparation du lanceur et/ou après incident survenu au cours de la mission), le satellite peut être initialement en rotation incontrôlée avec une vitesse de rotation importante. Dans un tel cas, la superposition d'un moment magnétique d'amortissement (variable au cours du temps) au moment magnétique de survie (constant au cours du temps) permet de réduire la vitesse de rotation dudit satellite. Le moment magnétique réellement formé est alors un moment magnétique modulé autour du moment magnétique de survie.

Dans des modes particuliers de mise en oeuvre, le générateur solaire étant agencé suivant un axe X du repère satellite, le moment magnétique de survie est parallèle à l'axe X et le moment cinétique de survie est orthogonal au dit axe X.

Dans des modes particuliers de mise en oeuvre, le générateur solaire étant sensiblement plan, le moment cinétique de survie forme, avec le plan du générateur solaire, un angle de valeur non nulle modulo 90°, de préférence comprise entre 10° et 80° modulo 90°.

Dans des modes particuliers de mise en oeuvre, le noeud ascendant de ladite orbite étant proche de midi ou de minuit et le générateur solaire étant agencé suivant un axe X du repère satellite, le moment magnétique de survie est orthogonal à l'axe X et le moment cinétique de survie est parallèle à axe X.

Dans des modes particuliers de mise en oeuvre, le noeud ascendant de ladite orbite étant proche de midi ou de minuit, le moment magnétique de survie et le moment cinétique de survie sont tels que la surface photosensible du générateur solaire est ensoleillée au moins deux fois au cours d'une orbite du satellite.

Dans des modes particuliers de mise en oeuvre, l'orbite du satellite est sensiblement polaire.

Selon un second aspect, la présente invention concerne un produit programme d'ordinateur comportant un ensemble d'instructions de code de programme qui, lorsqu'elles sont exécutées par un processeur, mettent en oeuvre un procédé de contrôle d'attitude selon l'un quelconque des modes de mise en oeuvre de l'invention.

Selon un troisième aspect, la présente invention concerne un satellite en orbite basse inclinée comportant un générateur solaire, un magnéto-coupleur, un volant d'inertie et un module de commande du magnéto-coupleur et du volant d'inertie. Selon l'invention, le module de commande comporte une mémoire dans laquelle sont mémorisées une consigne de moment magnétique interne non nul constant dans un repère satellite lié au satellite, dit « moment magnétique de survie », et une consigne de moment cinétique interne non nul constant dans ledit repère satellite, dit « moment cinétique de survie ». En outre, le module de commande est configuré pour commander, lorsque le satellite est en mode survie, le magnéto-coupleur et le volant d'inertie de sorte à former simultanément le moment magnétique de survie et le moment cinétique de survie pendant une partie au moins du mode survie.

Dans des modes particuliers de réalisation, le satellite peut comporter en outre l'une ou plusieurs des caractéristiques suivantes, prises isolément ou selon toutes les combinaisons techniquement possibles.

Dans des modes préférés de réalisation, le satellite comporte plusieurs magnéto-coupleurs et un dispositif de mesure du champ magnétique terrestre local, et en ce que le module de commande est configuré pour, lorsque le satellite est en mode survie :
- déterminer, en fonction de mesures du champ magnétique terrestre local, un moment magnétique interne, dit « moment magnétique d'amortissement », à former pour appliquer un couple magnétique sur ledit satellite adapté à s'opposer aux variations du champ magnétique terrestre local dans le repère satellite,
- commander les magnéto-coupleurs de sorte à ajouter le moment magnétique d'amortissement au moment magnétique de survie.

Dans des modes préférés de réalisation, le générateur solaire étant agencé suivant un axe X du repère satellite, le moment magnétique de survie est parallèle à l'axe X et le moment cinétique de survie est orthogonal à l'axe X.

Dans des modes préférés de réalisation, le générateur solaire étant sensiblement plan, le moment cinétique de survie forme, avec ledit plan dudit générateur solaire, un angle de valeur non nulle modulo 90°, de préférence comprise entre 10° et 80° modulo 90°.

Selon un quatrième aspect, la présente invention concerne un procédé de commande à distance d'un satellite dont l'attitude en mode survie est contrôlée selon l'un quelconque des modes de mise en oeuvre de l'invention. Selon l'invention, l'orbite du satellite étant dérivante, le procédé comporte, lorsque le satellite n'est pas en mode survie, une étape récurrente de mise à jour des consignes de moment magnétique de survie et de moment cinétique de survie mémorisées dans la mémoire du module de commande.

En effet, le satellite étant en orbite dérivante, il peut s'avérer impossible d'avoir des consignes de moment magnétique de survie et de moment cinétique de survie qui permettent d'assurer un ensoleillement moyen suffisant de la surface photosensible du générateur solaire pour toutes les orbites possibles dudit satellite. Ainsi, les consignes de moment magnétique de survie et de moment cinétique de survie sont mises à jour de façon récurrente, lorsque le satellite n'est pas en mode de survie, afin de mieux les adapter aux orbites ultérieures du satellite, si celui-ci devait passer en mode survie. Aucune mise à jour desdites consignes n'est effectuée au cours du mode survie. Les consignes de moment magnétique de survie et de moment cinétique de survie sont constantes pendant toute la durée dudit mode survie.

Dans des modes particuliers de mise en oeuvre, le procédé de commande à distance peut comporter en outre l'une ou plusieurs des caractéristiques suivantes, prises isolément ou selon toutes les combinaisons techniquement possibles.

Dans des modes particuliers de mise en oeuvre, l'étape de mise à jour est exécutée à chaque variation de six heures de l'heure solaire du noeud ascendant de l'orbite du satellite.

Dans des modes particuliers de mise en oeuvre, le générateur solaire étant sensiblement plan et le moment cinétique de survie formant, avec ledit plan dudit générateur solaire, un angle de valeur non nulle modulo 90°, de préférence comprise entre 10° et 80° modulo 90°, chaque mise à jour consiste en une inversion de polarité du moment magnétique de survie et/ou une inversion de polarité du moment cinétique de survie.

Dans des modes particuliers de mise en oeuvre, l'étape de mise à jour consiste à :
- inverser uniquement la polarité du moment magnétique de survie lorsque le noeud ascendant de l'orbite du satellite est à six heures ou à dix-huit heures,
- inverser à la fois la polarité du moment magnétique de survie et la polarité du moment cinétique de survie lorsque le noeud ascendant de l'orbite du satellite est à minuit ou à midi.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un mode de réalisation d'un satellite,
- Figure 2 : une représentation schématique d'une variante préférée de réalisation du satellite de la figure 1,
- Figure 3 : un diagramme représentant un mode préféré de mise en oeuvre d'un procédé de contrôle d'attitude d'un satellite en mode survie et d'un procédé de commande à distance dudit satellite,
- Figure 4 : une représentation schématique d'un premier exemple de mise en oeuvre d'un procédé de contrôle d'attitude en mode survie,
- Figure 5 : une représentation schématique d'un second exemple de mise en oeuvre d'un procédé de contrôle d'attitude en mode survie.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La présente invention concerne le contrôle d'attitude d'un satellite 10 en mode survie en orbite géocentrique basse inclinée.

Tel qu'indiqué précédemment, dans la présente demande, le mode survie est un mode de contrôle d'attitude mis en oeuvre immédiatement après séparation du lanceur et/ou, après que la mission du satellite 10 a débuté, en cas d'incident quelconque nécessitant d'interrompre la mission (collision avec une météorite, défaillance d'un propulseur, etc.).

Par « orbite basse », on entend que l'altitude maximale du satellite 10 est telle que le champ magnétique terrestre local est non négligeable et permet la mise en oeuvre d'actionneurs inertiels du type magnéto-coupleurs pour contrôler l'attitude dudit satellite. En pratique, cette condition est vérifiée lorsque l'altitude maximale du satellite 10 est inférieure à 2000 kilomètres.

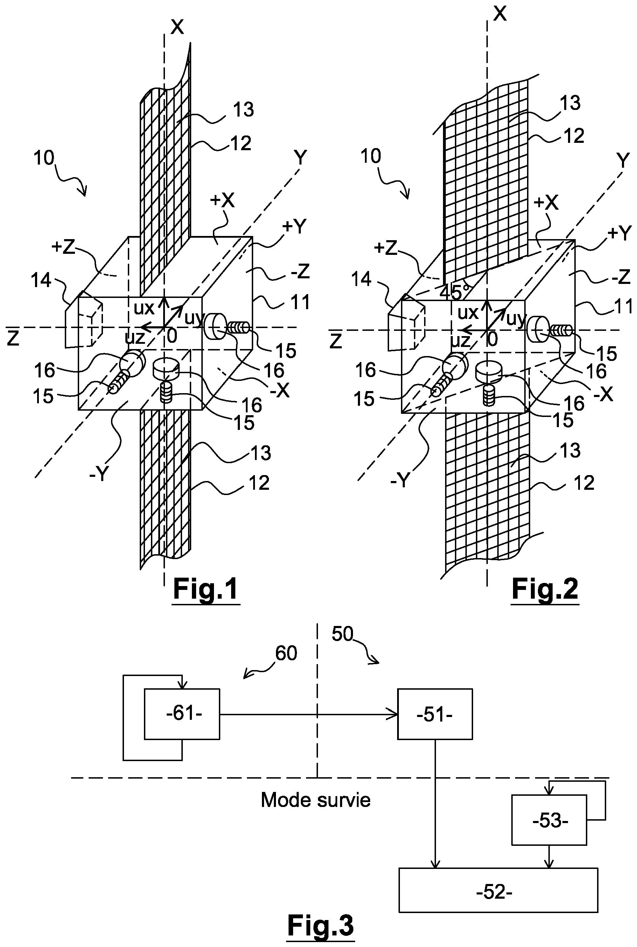

La figure 1 représente schématiquement un exemple de réalisation d'un satellite 10 selon l'invention.

Tel qu'illustré par la figure 1, le satellite 10 comporte un corps 11 et deux générateurs solaires 12 agencés de part et d'autre dudit corps 11. Chaque générateur solaire 12 comporte, sur une face, une surface photosensible 13 qui doit être orientée vers le Soleil S pour générer de la puissance électrique.

Dans la suite de la description, on se place de manière non limitative dans le cas où les générateurs solaires 12 sont d'orientation fixe et non modifiable par rapport au corps 11 du satellite 10. La présente invention est cependant également applicable au cas de générateurs solaires 12 mobiles par rapport audit corps 11. Dans le cas où les générateurs solaires 12 sont mobiles, leur orientation peut être modifiée au cours du mode survie, par exemple pour optimiser l'ensoleillement des surfaces photosensibles 13, ou bien lesdits générateurs solaires 12 peuvent être délibérément maintenus dans une orientation fixe prédéterminée pendant toute la durée du mode survie.

On associe au satellite 10 un repère satellite, par exemple centré sur un centre de masse 0 du satellite 10, comportant trois axes X, Y et Z orthogonaux entre eux. Le repère satellite est lié au satellite 10, c'est-à-dire qu'il est entièrement défini par la géométrie du satellite 10. En d'autres termes, toute rotation du satellite 10 en repère inertiel se traduit par une rotation équivalente du repère satellite en repère inertiel.

Dans l'exemple de réalisation illustré par la figure 1, le corps 11 du satellite 10 est sensiblement en forme de parallélépipède rectangle, et les axes X, Y et Z sont orthogonaux à des faces respectives, orthogonales entre elles, dudit corps 11. Plus particulièrement :
- l'axe X est orthogonal à des faces +X et -X du corps 11 portant les générateurs solaires 12, et de sorte que lesdits générateurs solaires 12 sont agencés suivant l'axe X, c'est-à-dire parallèles audit axe X,
- l'axe Z est orthogonal à des faces +Z et -Z du corps 11, dont la face +Z porte un instrument 14 d'une charge utile du satellite 10 et doit être dirigée vers la Terre T pour effectuer sa mission,
- l'axe Y est orthogonal à des faces +Y et -Y du corps 11.

Pour les besoins de la description, on associe également, à chacun des axes X, Y et Z du repère satellite des vecteurs unitaires respectivement ux, uy et uz. Les vecteurs unitaires ux, uy et uz sont orientés du centre de masse 0 vers les faces respectivement +X, +Y et +Z, et l'ensemble (ux, uy, uz) constitue une base orthonormée directe du repère satellite.

Le satellite 10 comporte également plusieurs actionneurs inertiels mis en oeuvre pour le contrôle d'attitude.

Plus particulièrement, le satellite 10 comporte un ensemble de magnéto-coupleurs 15 adaptés à former un moment magnétique interne d'axe quelconque dans le repère satellite. Le satellite 10 comporte également un ensemble de volants d'inertie 16, tels que des roues de réaction ou des actionneurs gyroscopiques, adaptés à former un moment cinétique interne d'axe quelconque dans ledit repère satellite.

Le satellite 10 comporte également un module de commande (non représenté sur les figures) adapté à commander les magnéto-coupleurs 15 et les volants d'inertie 16.

Le module de commande comporte par exemple au moins un processeur et au moins une mémoire dans laquelle est mémorisé un produit programme d'ordinateur, sous la forme d'un ensemble d'instructions de code de programme à exécuter pour mettre en oeuvre les différentes étapes d'un procédé 50 de contrôle de l'attitude du satellite 10 en mode survie. Dans une variante, le module de commande comporte un ou des circuits logiques programmables, de type FPGA, PLD, etc., et/ou circuits intégrés spécialisés (ASIC) adaptés à mettre en oeuvre tout ou partie desdites étapes du procédé 50 de contrôle de l'attitude dudit satellite 10 en mode survie.

En d'autres termes, le module de commande comporte un ensemble de moyens configurés de façon logicielle (produit programme d'ordinateur spécifique) et/ou matérielle (FPGA, PLD, ASIC, etc.) pour mettre en oeuvre le procédé 50 de contrôle d'attitude du satellite 10 en mode survie.

La figure 2 représente schématiquement une variante préférée de réalisation du satellite 10 illustré par la figure 1.

Dans l'exemple illustré par la figure 1, les générateurs solaires 12 sont sensiblement plans et sont sensiblement parallèles au plan XY formé par les axes X et Y du repère satellite, les surfaces photosensibles 13 étant agencées du côté de la face -Z du corps 11 du satellite 10.

Dans l'exemple illustré par la figure 2, les générateurs solaires 12, également sensiblement plans, sont agencés de manière oblique par rapport au plan XY et par rapport au plan XZ formé par les axes X et Z du repère satellite. De préférence, le plan de chaque générateur solaire 12 forme avec le plan XY un angle de valeur non nulle modulo 90°, les surfaces photosensibles 13 étant agencées du côté de la face -Z du corps 11 du satellite 10. Par exemple, l'angle entre le plan de chaque générateur solaire 12 et le plan XY est de valeur comprise entre 10° et 80° modulo 90°, voire comprise entre 20° et 70° modulo 90°. Dans l'exemple illustré par la figure 2, l'angle entre le plan de chaque générateur solaire 12 et le plan XY est égal à 45°.

Il est à noter que, dans le cas de générateurs solaires 12 montés mobiles en rotation autour de l'axe X, la configuration de la figure 2 est obtenue par une simple rotation des générateurs solaires 12 par rapport à la configuration de la figure 1.

La figure 3 représente schématiquement les principales étapes d'un procédé 50 de contrôle de l'attitude du satellite 10 en mode survie selon l'invention, lesquelles sont :
- une étape 51, préalable au mode survie, de mémorisation dans une mémoire du module de commande d'une consigne de moment magnétique interne constant dans le repère satellite, dit « moment magnétique de survie », et d'une consigne de moment cinétique interne constant dans ledit repère satellite, dit « moment cinétique de survie »,
- une étape 52 de commande des magnéto-coupleurs 15 et des volants d'inertie 16 de sorte à former simultanément le moment magnétique de survie et le moment cinétique de survie pendant une partie au moins du mode survie.

Ainsi, les magnéto-coupleurs 15 et les volants d'inertie 16 sont principalement mis en oeuvre, lorsque le satellite 10 est en mode survie, pour former respectivement le moment magnétique de survie et le moment cinétique de survie qui sont tous deux non nuls et constants dans le repère satellite, et qui ont été mémorisés dans une mémoire du module de commande avant que le satellite n'entre en mode survie. Le moment magnétique de survie et le moment cinétique de survie, non nuls et constants au cours du temps en repère satellite, sont formés simultanément pendant plusieurs périodes orbitales, et de préférence pendant toute la durée du mode survie.

Le moment magnétique de survie permet de fixer, par effet boussole, l'attitude du satellite 10 suivant deux axes par rapport au champ magnétique terrestre local. La position angulaire dudit satellite 10 autour du moment magnétique de survie est imposée par le moment cinétique de survie.

Il est donc possible de prédéterminer, en fonction des caractéristiques de l'orbite du satellite 10 et de l'agencement des générateurs solaires 12 dans le repère satellite, un moment magnétique de survie et un moment cinétique de survie qui permettent d'optimiser l'ensoleillement moyen des surfaces photosensibles 13 des générateurs solaires 12.

Dans des modes particuliers de réalisation, le satellite 10 peut comporter un dispositif de mesure trois axes du champ magnétique terrestre local. Le dispositif de mesure (non représenté sur les figures) comporte par exemple trois magnétomètres adaptés à mesurer les composantes du champ magnétique terrestre local suivant les axes respectivement X, Y et Z.

Le cas échéant, et tel qu'illustré par la figure 3, le procédé 50 de contrôle d'attitude en mode survie peut comporter des étapes récurrentes de :
- 53 détermination, en fonction de mesures du champ magnétique terrestre local, d'un moment magnétique interne, dit « moment magnétique d'amortissement », à former pour appliquer un couple magnétique sur ledit satellite 10 qui s'oppose aux variations du champ magnétique terrestre local dans le repère satellite,
- 52 commande des magnéto-coupleurs 15 de sorte à superposer le moment magnétique d'amortissement au moment magnétique de survie.

En effet, en mode survie (après séparation du lanceur et/ou après incident survenu au cours de la mission), le satellite 10 peut être initialement en rotation incontrôlée avec une vitesse de rotation importante. Le cas échéant, il est tout à fait conventionnel de former des couples d'amortissement pour réduire la vitesse de rotation du satellite 10. Les couples d'amortissement peuvent être formés au moyen des magnéto-coupleurs 15, auquel cas le moment magnétique d'amortissement est ajouté au moment magnétique de survie. Rien n'exclut cependant de former les couples d'amortissement au moyen d'autres actionneurs inertiels du satellite 10 et/ou au moyen de propulseurs dudit satellite 10. La détermination d'un moment magnétique d'amortissement adapté est considérée comme étant à la portée de l'homme du métier, et peut par exemple mettre en oeuvre une commande « B-point ».

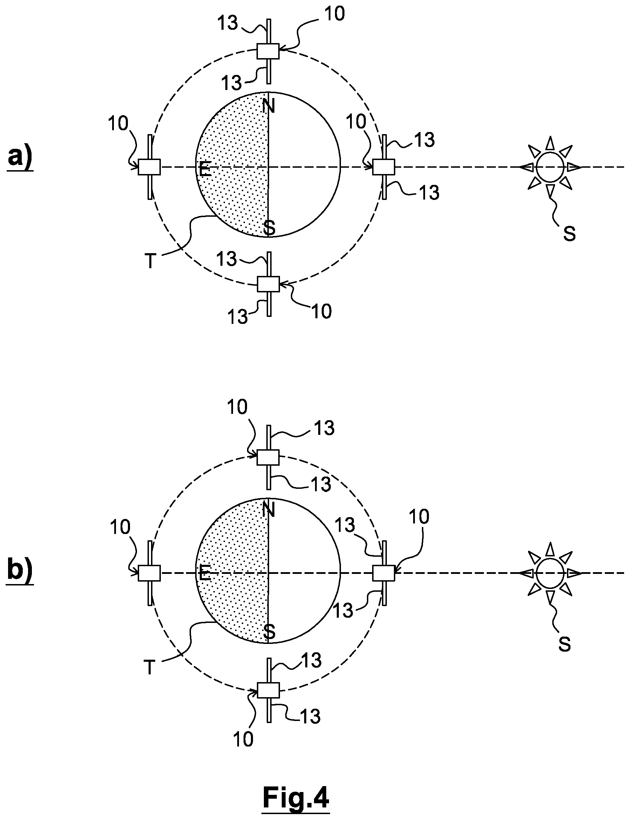

La figure 4 représente schématiquement un exemple de mise en oeuvre du procédé 50 de contrôle d'attitude du satellite de la figure 1 en mode survie. Dans l'exemple illustré par la figure 4, ledit satellite 10 est en orbite polaire et le point ascendant de l'orbite est à midi ou à minuit (en d'autres termes, le Soleil S se trouve dans le plan de l'orbite du satellite 10).

Le satellite 10 se déplace sur son orbite avec une pulsation orbitale ω₀. De manière connue, le champ magnétique terrestre local au satellite 10, en repère inertiel, tourne sur lui-même à deux fois la pulsation orbitale ω₀, à mesure que le satellite 10 se déplace sur son orbite. En commandant les magnéto-coupleurs 15 de sorte à former le moment magnétique de survie, qui est non nul et constant au cours du temps, le satellite 10 suit les lignes de force du champ magnétique terrestre, ce qui provoque la rotation dudit satellite 10 sur lui-même à deux fois la pulsation orbitale ω₀.

Dans l'exemple de mise en oeuvre illustré par la figure 4, le moment magnétique de survie est parallèle à l'axe X du repère satellite, et le moment cinétique de survie est parallèle à l'axe Y. De la sorte, l'axe X du repère satellite, suivant lequel sont agencés les générateurs solaires 12, se trouve dans le plan de l'orbite du satellite 10. En outre, le plan des générateurs solaires 12 (qui est parallèle au plan XY) est sensiblement orthogonal aux rayons du Soleil S lorsque le satellite 10 passe l'équateur E et survole les pôles Nord N et Sud S de la Terre T. Par conséquent, suivant le sens du moment magnétique de survie et le sens du moment cinétique de survie, les surfaces photosensibles 13 des générateurs solaires 12 seront dirigées vers le Soleil :
- soit lorsque le satellite 10 passe l'équateur E (configuration de la partie a) de la figure 4),
- soit lorsque le satellite 10 survole les pôles Nord N et Sud S (configuration de la partie b) de la figure 4).

En particulier, en désignant par Ms le moment magnétique de survie (de module |Ms| non nul) et par Hs le moment cinétique de survie (de module |Hs| non nul), et en considérant que le noeud ascendant est à midi, alors la configuration de la partie a) est obtenue dans les cas suivants :
- Ms = |Ms|·ux et Hs = -|Hs|·uy ; ou
- Ms = -|Ms|·ux et Hs = |Hs|·uy.

En considérant que le noeud ascendant est à midi, la configuration de la partie b) est obtenue dans les cas suivants :
- Ms = |Ms|·ux et Hs = |Hs|·uy ; ou
- Ms = -|Ms|·ux et Hs = -|Hs|·uy.

Il est donc possible de forcer le satellite 10 à se placer dans l'une ou l'autre des configurations des parties a) et b) de la figure 4, en choisissant un sens approprié du moment magnétique de survie Ms suivant l'axe X et un sens approprié du moment cinétique de survie Hs suivant l'axe Y. On note en outre que, pour un moment cinétique de survie Hs donné, la configuration de la partie b) peut être obtenue, à partir de la configuration de la partie a), par une simple inversion de la polarité du moment magnétique de survie Ms à module |Ms| constant.

De préférence, le moment magnétique de survie Ms et le moment cinétique de survie Hs sont prédéterminés de sorte à placer le satellite 10 dans la configuration de la partie b). En effet, les surfaces photosensibles 13 des générateurs solaires 12 sont alors ensoleillées deux fois par orbite du satellite 10, et la puissance électrique générée est alors 1.5 à 2 fois supérieure à celle générée dans la configuration de la partie a). Les superficies des surfaces photosensibles 13 sont dimensionnées pour assurer que la puissance électrique ainsi générée est suffisante pour garantir l'autonomie électrique d'une plateforme du satellite 10 pendant le mode survie.

Il est à noter que des résultats analogues, en termes de performances, peuvent être obtenus dans le cas illustré par la figure 4 (satellite 10 de la figure 1 et orbite polaire avec un noeud ascendant à midi ou à minuit) en choisissant un moment magnétique de survie Ms parallèle à l'axe Y et un moment cinétique de survie Hs parallèle à l'axe X.

En outre, le moment magnétique de survie Ms et le moment cinétique de survie Hs utilisés dans l'exemple illustré par la figure 4 peuvent être utilisés pour le satellite 10 de la figure 2 en orbite polaire avec un noeud ascendant à midi ou à minuit. Dans un tel cas, le moment cinétique de survie Hs forme, avec le plan de chaque générateur solaire 12, un angle égal à 45° modulo 90°.

En outre, tout ce qui a été décrit en référence à la figure 4 en considérant que le noeud ascendant est à midi ou à minuit reste valable notamment lorsque le noeud ascendant est proche de midi ou de minuit, c'est-à-dire à plus ou moins deux heures (± 2 heures) autour de midi ou de minuit.

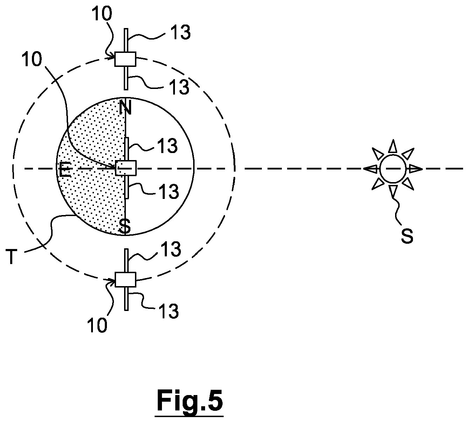

La figure 5 représente schématiquement un exemple de mise en oeuvre du procédé 50 de contrôle d'attitude du satellite de la figure 1 en mode survie. Dans l'exemple illustré par la figure 5, ledit satellite 10 est en orbite polaire et le point ascendant de l'orbite est à six heures ou à dix-huit heures.

Dans l'exemple de mise en oeuvre illustré par la figure 5, le moment magnétique de survie Ms est parallèle à l'axe X du repère satellite, et le moment cinétique de survie Hs est parallèle à l'axe Z. Tel qu'illustré par la figure 5, le sens du moment cinétique de survie Ms et le sens du moment cinétique de survie peuvent être choisis de sorte à assurer que les surfaces photosensibles 13 des générateurs solaires 12 seront ensoleillées pendant toute la durée de l'orbite.

Pour le satellite 10 de la figure 2, il est possible, dans le cas d'une orbite polaire avec un noeud ascendant à six heures ou à dix-huit heures, de conserver un moment magnétique de survie Ms suivant l'axe X et un moment cinétique de survie Hs suivant l'axe Y (comme dans le cas illustré par la figure 4). Eventuellement, la polarité du moment magnétique de survie Ms (c'est-à-dire le sens du moment magnétique de survie Ms selon l'axe X) et/ou la polarité du moment cinétique de survie Hs (c'est-à-dire le sens du moment cinétique de survie Hs selon l'axe Y) peuvent être modifiés, à modules |Ms| et |Hs| constants, pour assurer que les surfaces photosensibles 13 des générateurs solaires 12 seront ensoleillées pendant toute la durée de l'orbite.

On comprend donc qu'il est toujours possible, pour une orbite donnée, de prédéterminer un moment magnétique de survie Ms et moment cinétique de survie Hs, constants en repère satellite, à former simultanément pendant tout ou partie du mode survie, qui permettent d'optimiser l'ensoleillement moyen des surfaces photosensibles 13 des générateurs solaires 12 pour l'orbite considérée. Les consignes de moment magnétique de survie Ms et de moment cinétique de survie Hs peuvent donc être mémorisées dans une mémoire du module de commande avant que le satellite 10 ne passe en mode survie. Ensuite, lorsque le satellite 10 passera en mode survie, le module de commande se contentera de récupérer et d'appliquer lesdites consignes mémorisées dans la mémoire.

Par exemple, pour un satellite 10 en orbite à 800 kilomètres d'altitude, d'inertie comprise entre 3000 et 7000 kg·m², un moment magnétique de survie Ms de module |Ms| de l'ordre de 150 A·m² permettra de former un couple de rappel suffisant pour compenser la plupart des couples perturbateurs (essentiellement l'effet du gradient de gravité). Un moment cinétique de survie Hs de module |Hs| de l'ordre de 15 N·m·s sera généralement suffisant pour bloquer la position angulaire du satellite 10 autour du champ magnétique terrestre local.

Dans le cas d'une orbite dérivante, les caractéristiques de l'orbite vont évoluer au cours du temps. En particulier, l'heure solaire du point ascendant de l'orbite va évoluer au cours du temps, de sorte qu'il peut s'avérer impossible d'avoir des consignes de moment magnétique de survie Ms et de moment cinétique de survie Hs qui permettent d'assurer un ensoleillement moyen suffisant des surfaces photosensibles des générateurs solaires 12 pour toutes les orbites possibles dudit satellite 10.

A cet effet, l'invention concerne également un procédé 60 de commande à distance du satellite 10 par une station sol (non représentée sur les figures), représenté sur la figure 3.

Tel qu'illustré par la figure 3, le procédé 60 de commande à distance comporte, lorsque le satellite 10 n'est pas en mode survie, une étape 61 récurrente de mise à jour au cours de laquelle la station envoie des commandes au satellite 10. Ces commandes visent à actualiser les consignes de moment magnétique de survie Ms et de moment cinétique de survie Hs mémorisées dans la mémoire du module de commande. Au niveau du satellite 10, le module de commande mémorise, au cours de l'étape 51 de mémorisation, les consignes mises à jour conformément aux commandes reçues de la station sol.

Typiquement, l'étape 61 de mise à jour est exécutée à chaque variation de six heures de l'heure solaire du noeud ascendant de l'orbite du satellite 10. Rien n'exclut cependant d'exécuter l'étape 61 de mise à jour pour des variations différentes de l'heure solaire du noeud ascendant de l'orbite du satellite 10, inférieures ou supérieures à six heures.

Les mises à jour des consignes de moment magnétique de survie Ms et de moment cinétique de survie Hs visent à les rendre mieux adaptées aux orbites à venir du satellite 10, dans l'hypothèse où ledit satellite 10 passerait en mode survie. A cet effet, il est possible, au cours de l'étape 61 de mise à jour, de modifier les axes respectifs du moment magnétique de survie Ms et du moment cinétique de survie Hs et/ou leurs sens suivant leurs axes respectifs. Les modules |Ms| et |Hs| sont de préférence maintenus constants, toutefois rien n'exclut de les actualiser également.

Dans le cas du satellite 10 de la figure 2, on a vu précédemment qu'il était possible de conserver un moment magnétique de survie Ms suivant l'axe X et un moment cinétique de survie Hs suivant l'axe Y pour les principales orbites possibles (noeud ascendant à minuit, six heures, midi et dix-huit heures). Il en résulte que chaque mise à jour est particulièrement simple et peut consister en une inversion de polarité du moment magnétique de survie Ms et/ou une inversion de polarité du moment cinétique de survie Hs, tout en assurant que les surfaces photosensibles 13 des générateurs solaires 12 sont ensoleillées au moins une fois quelle que soit l'orbite du satellite 10.

De manière plus générale, c'est également possible dans le cas du satellite 10 de la figure 1 en considérant un moment cinétique de survie Hs formant, avec le plan de chaque générateur solaire 12, un angle de valeur non nulle modulo 90°, par exemple comprise entre 10° et 80° modulo 90°.

Dans un tel cas, l'étape 61 de mise à jour consiste par exemple à :
- inverser uniquement la polarité du moment magnétique de survie Ms lorsque le noeud ascendant de l'orbite du satellite 10 est à six heures ou à dix-huit heures,
- inverser à la fois la polarité du moment magnétique de survie Ms et la polarité du moment cinétique de survie Hs lorsque le noeud ascendant de l'orbite du satellite 10 est à minuit ou à midi.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant un satellite 10 comportant plusieurs magnéto-coupleurs 15 et plusieurs volants d'inertie 16. Pour former le moment magnétique de survie et le moment cinétique de survie, qui sont constants dans le repère satellite, il peut cependant être envisagé d'équiper le satellite 10 avec un seul magnéto-coupleur 15 et un seul volant d'inertie 16. Le cas échéant, la magnéto-coupleur 15 et le volant d'inertie 16 doivent être agencés dans le satellite 10 dans les directions prévues du moment magnétique de survie et du moment cinétique de survie. Toutefois, plusieurs magnéto-coupleurs seront nécessaires si ceux-ci doivent être mis en oeuvre pour former un moment magnétique d'amortissement, et plusieurs volants d'inertie seront nécessaires si ceux-ci doivent être mis en oeuvre pour stabiliser l'attitude du satellite 10 suivant trois axes en dehors du mode survie.

Egalement, l'invention a été décrite en considérant principalement un satellite 10 en orbite polaire. L'invention est cependant applicable à tout type d'orbite basse inclinée. Rien n'exclut notamment de considérer une orbite sensiblement polaire, c'est-à-dire une orbite dont l'inclinaison est comprise entre 70° et 110°. En outre, l'invention trouve uneapplication particulièrement avantageuse dans le cas d'orbites circulaires, mais est également applicable à des orbites non circulaires (par exemple dans le cas d'une désorbitation).

En outre, l'invention a été décrite en considérant un satellite 10 comportant deux générateurs solaires 12. On comprend cependant que l'invention est généralisable à un nombre quelconque de générateurs solaires 12, égal ou supérieur à un.

## Revendications

1. Procédé (50) de contrôle d'attitude d'un satellite (10) en mode survie en orbite basse inclinée, le satellite (10) comportant un générateur solaire (12), un magnéto-coupleur (15) et un volant d'inertie (16), **caractérisé en ce que** ledit procédé (50) comporte :
- une étape (51), préalable au mode survie, de mémorisation d'une consigne de moment magnétique interne non nul constant dans un repère satellite lié au satellite (10), dit « moment magnétique de survie », et d'une consigne de moment cinétique interne non nul constant dans ledit repère satellite, dit « moment cinétique de survie », le moment magnétique de survie et le moment cinétique de survie étant prédéfinis de sorte à assurer qu'une surface photosensible (13) du générateur solaire (12) est ensoleillée au moins une fois au cours d'une orbite du satellite (10),
- une étape (52) de commande du magnéto-coupleur (15) et du volant d'inertie (16) de sorte à former simultanément le moment magnétique de survie et le moment cinétique de survie pendant une partie au moins du mode survie.

2. Procédé (50) selon la revendication 1, **caractérisé en ce que**, le satellite (10) comportant plusieurs magnéto-coupleurs (15) et un dispositif de mesure du champ magnétique terrestre local, ledit procédé comporte des étapes de :
- (53) détermination, en fonction de mesures du champ magnétique terrestre local, d'un moment magnétique interne, dit « moment magnétique d'amortissement », à former pour appliquer un couple magnétique sur ledit satellite (10) qui s'oppose aux variations du champ magnétique terrestre local dans le repère satellite,
- (52) commande des magnéto-coupleurs (15) de sorte à superposer le moment magnétique d'amortissement au moment magnétique de survie.

3. Procédé (50) selon l'une des revendications précédentes, **caractérisé en ce que**, le générateur solaire (12) étant agencé suivant un axe X du repère satellite, le moment magnétique de survie est parallèle à l'axe X et le moment cinétique de survie est orthogonal audit axe X.

4. Procédé (50) selon la revendication 3, **caractérisé en ce que**, le générateur solaire (12) étant sensiblement plan, le moment cinétique de survie forme, avec ledit plan dudit générateur solaire, un angle de valeur non nulle modulo 90°.

5. Procédé (50) selon l'une des revendications 1 à 2, **caractérisé en ce que**, le noeud ascendant de ladite orbite étant proche de midi ou de minuit et le générateur solaire (12) étant agencé suivant un axe X du repère satellite, le moment magnétique de survie est orthogonal à l'axe X et le moment cinétique de survie est parallèle audit axe X.

6. Procédé (50) selon l'une des revendications précédentes, **caractérisé en ce que**, le noeud ascendant de ladite orbite étant proche de midi ou de minuit, le moment magnétique de survie et le moment cinétique de survie sont prédéterminés de sorte à assurer que la surface photosensible (13) du générateur solaire (12) est ensoleillée au moins deux fois au cours d'une orbite du satellite (10).

7. Procédé (50) selon l'une des revendications précédentes, **caractérisé en ce que** l'orbite du satellite (10) est sensiblement polaire.

8. Produit programme d'ordinateur **caractérisé en ce qu'**il comporte un ensemble d'instructions de code de programme qui, lorsqu'elles sont exécutées par un processeur, mettent en oeuvre un procédé (50) de contrôle d'attitude selon l'une des revendications précédentes.

9. Satellite (10) en orbite basse inclinée comportant un générateur solaire (12), un magnéto-coupleur (15), un volant d'inertie (16) et un module de commande du magnéto-coupleur (15) et du volant d'inertie (16), **caractérisé en ce que** le module de commande comporte une mémoire dans laquelle sont mémorisées une consigne de moment magnétique interne non nul constant dans un repère satellite lié au satellite (10), dit « moment magnétique de survie », et une consigne de moment cinétique interne non nul constant dans ledit repère satellite, dit « moment cinétique de survie », et **en ce que** le module de commande est configuré pour commander, lorsque le satellite (10) est en mode survie, le magnéto-coupleur (15) et le volant d'inertie (16) de sorte à former simultanément le moment magnétique de survie et le moment cinétique de survie pendant une partie au moins du mode survie.

10. Satellite (10) selon la revendication 9, **caractérisé en ce qu'**il comporte plusieurs magnéto-coupleurs (15) et un dispositif de mesure du champ magnétique terrestre local, et **en ce que** le module de commande est configuré pour, lorsque le satellite (10) est en mode survie :
- déterminer, en fonction de mesures du champ magnétique terrestre local, un moment magnétique interne, dit « moment magnétique d'amortissement », à former pour appliquer un couple magnétique sur ledit satellite (10) adapté à s'opposer aux variations du champ magnétique terrestre local dans le repère satellite,
- commander les magnéto-coupleurs (15) de sorte à superposer le moment magnétique d'amortissement au moment magnétique de survie.

11. Satellite (10) selon l'une des revendications 9 à 10, **caractérisé en ce que** le générateur solaire (12) étant agencé suivant un axe X du repère satellite, le moment magnétique de survie est parallèle à l'axe X et le moment cinétique de survie est orthogonal audit axe X.

12. Satellite (10) selon la revendication 11, **caractérisé en ce que**, le générateur solaire (12) étant sensiblement plan, le moment cinétique de survie forme, avec ledit plan dudit générateur solaire, un angle de valeur non nulle modulo 90°.

13. Procédé (60) de commande à distance d'un satellite (10) selon l'une des revendications 9 à 12, **caractérisé en ce que**, l'orbite dudit satellite étant dérivante, ledit procédé comporte, lorsque le satellite (10) n'est pas en mode survie, une étape (61) récurrente de mise à jour des consignes de moment magnétique de survie et de moment cinétique de survie mémorisées dans la mémoire du module de commande.

14. Procédé (60) selon la revendication 13, **caractérisé en ce que** l'étape (61) de mise à jour est exécutée à chaque variation de six heures de l'heure solaire du noeud ascendant de l'orbite du satellite (10).

15. Procédé (60) selon l'une des revendications 13 à 14, **caractérisé en ce que**, le générateur solaire (12) étant sensiblement plan et le moment cinétique de survie formant, avec ledit plan dudit générateur solaire, un angle de valeur non nulle modulo 90°, chaque mise àjour consiste en une inversion de polarité du moment magnétique de survie et/ou une inversion de polarité du moment cinétique de survie.

## Patentansprüche

1. Verfahren (50) zur Lageüberwachung eines Satelliten (10) in Überlebensmodus in niedriger geneigter Umlaufbahn, wobei der Satellit (10) einen Solargenerator (12), einen Magnetkoppler (15) und ein Schwungrad (16) umfasst, **dadurch gekennzeichnet, dass** das Verfahren (50) umfasst:
- einen dem Überlebensmodus vorausgehenden Schritt (51) des Speicherns eines als "Überlebens-Magnetmoment" bezeichneten konstanten inneren Magnetmoment-Sollwerts von ungleich Null in einer mit dem Satelliten (10) verknüpften Satellitenmarke, und eines als "Überlebens-Bewegungsmoment" bezeichneten konstanten inneren Bewegungsmoment-Sollwerts von ungleich Null in der Satellitenmarke, wobei das Überlebens-Magnetmoment und das Überlebens-Bewegungsmoment so vordefiniert sind, dass sichergestellt wird, dass eine lichtempfindliche Fläche (13) des Solargenerators (12) mindestens ein Mal im Laufe einer Umlaufbahn des Satelliten (10) von der Sonne beschienen wird,
- einen Schritt (52) des Steuerns des Magnetkopplers (15) und des Schwungrads (16) so, dass während mindestens eines Teils des Überlebensmodus gleichzeitig das Überlebens-Magnetmoment und das Überlebens-Bewegungsmoment gebildet werden.

2. Verfahren (50) nach Anspruch 1, **dadurch gekennzeichnet, dass** wenn der Satellit (10) mehrere Magnetkoppler (15) und eine Vorrichtung zum Messen des lokalen Erdmagnetfelds umfasst, das Verfahren Schritte umfasst des:
- (53) Bestimmens, in Abhängigkeit von Messungen des lokalen Erdmagnetfelds, eines als "Dämpfungs-Magnetmoment" bezeichneten inneren Magnetmoments, das zu bilden ist, um ein magnetisches Drehmoment an den Satelliten (10) anzulegen, das sich den Abweichungen des lokalen Erdmagnetfelds in der Satellitenmarke entgegensetzt,
- (52) Steuerns der Magnetkoppler (15) so, dass das Dämpfungs-Magnetmoment dem Überlebens-Magnetmoment überlagert wird.

3. Verfahren (50) nach einem der vorstehenden Ansprüche, **dadurch gekennzeichnet, dass** wenn der Solargenerator (12) entlang einer X-Achse der Satellitenmarke angeordnet ist, das Überlebens-Magnetmoment zur X-Achse parallel ist und Überlebens-Bewegungsmoment zur X-Achse orthogonal ist.

4. Verfahren (50) nach Anspruch 3, **dadurch gekennzeichnet, dass** wenn der Solargenerator (12) im Wesentlichen eben ist, das Überlebens-Bewegungsmoment zur Ebene des Solargenerators einen Winkel mit einem Wert von ungleich Null Modulo 90° bildet.

5. Verfahren (50) nach einem der Ansprüche 1 bis 2, **dadurch gekennzeichnet, dass** wenn der ansteigende Knoten der Umlaufbahn nahe Mittag oder Mitternacht ist und der Solargenerator (12) entlang einer X-Achse der Satellitenmarke angeordnet ist, das Überlebens-Magnetmoment zur X-Achse orthogonal ist und das Überlebens-Bewegungsmoment zur X-Achse parallel ist.

6. Verfahren (50) nach einem der vorstehenden Ansprüche, **dadurch gekennzeichnet, dass** wenn der ansteigende Knoten der Umlaufbahn nahe Mittag oder Mitternacht ist, das Überlebens-Magnetmoment und das Überlebens-Bewegungsmoment so vorbestimmt sind, dass sichergestellt wird, dass die lichtempfindliche Fläche (13) des Solargenerators (12) mindestens zwei Mal im Laufe einer Umlaufbahn des Satelliten (10) von der Sonne beschienen wird.

7. Verfahren (50) nach einem der vorstehenden Ansprüche, **dadurch gekennzeichnet, dass** die Umlaufbahn des Satelliten (10) im Wesentlichen polar ist.

8. Computerprogrammprodukt, **dadurch gekennzeichnet, dass** es einen Satz Programmcodeanweisungen umfasst, die, wenn sie von einem Prozessor ausgeführt werden, ein Verfahren (50) zur Lageüberwachung nach einem der vorstehenden Ansprüche umsetzen.

9. Satellit (10) in niedriger geneigter Umlaufbahn, der einen Solargenerator (12), einen Magnetkoppler (15), ein Schwungrad (16) und ein Modul zum Steuern des Magnetkopplers (15) und des Schwungrads (16) umfasst, **dadurch gekennzeichnet, dass** das Steuermodul einen Speicher umfasst, in dem ein als "Überlebens-Magnetmoment" bezeichneter konstanter innerer Magnetmoment-Sollwert von ungleich Null in einer mit dem Satelliten (10) verknüpften Satellitenmarke, und ein als "Überlebens-Bewegungsmoment" bezeichneter konstanter innerer Bewegungsmoment-Sollwert von ungleich Null in der Satellitenmarke gespeichert werden, und dadurch, dass das Steuermodul dafür konfiguriert ist, wenn sich der Satellit (10) in Überlebensmodus befindet, den Magnetkoppler (15) und das Schwungrad (16) so zu steuern, dass während mindestens eines Teils des Überlebensmodus gleichzeitig das Überlebens-Magnetmoment und das Überlebens-Bewegungsmoment gebildet werden.

10. Satellit (10) nach Anspruch 9, **dadurch gekennzeichnet, dass** er mehrere Magnetkoppler (15) und eine Vorrichtung zum Messen des lokalen Erdmagnetfelds umfasst, und dadurch, dass das Steuermodul dafür konfiguriert ist, wenn sich der Satellit (10) in Überlebensmodus befindet:
- in Abhängigkeit von Messungen des lokalen Erdmagnetfelds ein als "Dämpfungs-Magnetmoment" bezeichnetes inneres Magnetmoment zu bestimmen, das zu bilden ist, um ein magnetisches Drehmoment an den Satelliten (10) anzulegen, das dazu geeignet ist, sich den Abweichungen des lokalen Erdmagnetfelds in der Satellitenmarke entgegenzusetzen,
- die Magnetkoppler (15) so zu steuern, dass das Dämpfungs-Magnetmoment dem Überlebens-Magnetmoment überlagert wird.

11. Satellit (10) nach einem der Ansprüche 9 bis 10, **dadurch gekennzeichnet, dass** wenn der Solargenerator (12) entlang einer X-Achse der Satellitenmarke angeordnet ist, das Überlebens-Magnetmoment zur X-Achse parallel ist und Überlebens-Bewegungsmoment zur X-Achse orthogonal ist.

12. Satellit (10) nach Anspruch 11, **dadurch gekennzeichnet, dass** wenn der Solargenerator (12) im Wesentlichen eben ist, das Überlebens-Bewegungsmoment zur Ebene des Solargenerators einen Winkel mit einem Wert von ungleich Null Modulo 90° bildet.

13. Verfahren (60) zum Fernsteuern eines Satelliten (10) nach einem der Ansprüche 9 bis 12, **dadurch gekennzeichnet, dass** wenn die Umlaufbahn des Satelliten driftet, das Verfahren, wenn sich der Satellit (10) nicht in Überlebensmodus befindet, einen wiederkehrenden Schritt (61) des Aktualisierens der Überlebens-Magnetmoment- und Überlebens-Bewegungsmoment-Sollwerte umfasst, die im Speicher des Steuermoduls gespeichert sind.

14. Verfahren (60) nach Anspruch 13, **dadurch gekennzeichnet, dass** der Schritt (61) des Aktualisierens bei jeder Abweichung von sechs Stunden der Sonnenzeit des ansteigenden Knotens von der Umlaufbahn des Satelliten (10) ausgeführt wird.

15. Verfahren (60) nach einem der Ansprüche 13 bis 14, **dadurch gekennzeichnet, dass** wenn der Solargenerator (12) im Wesentlichen eben ist und das Überlebens-Bewegungsmoment zur Ebene des Solargenerators einen Winkel mit einem Wert von ungleich Null Modulo 90° bildet, jede Aktualisierung in einer Umpolung des Überlebens-Magnetmoments und/oder einer Umpolung des Überlebens-Bewegungsmoments besteht.

## Claims

1. Method (50) of supervising attitude of a satellite (10) in survival mode in inclined low orbit, the satellite (10) comprising a solar generator (12), a magneto-coupler (15) and an inertial flywheel (16), **characterised in that** said method (50) comprises:
- a step (51), prior to the survival mode, of storing a non-zero internal magnetic moment setting which is constant in a satellite frame tied to the satellite (10), termed the "survival magnetic moment", and a non-zero internal kinetic moment setting which is constant in said satellite frame, termed the "survival kinetic moment", with the survival magnetic moment and the survival kinetic moment being predefined in such a way as to ensure that a photosensitive surface (13) of the solar generator (12) receives sunlight at least once during one orbit of the satellite (10),
- a step (52) of controlling the magneto-coupler (15) and the inertial flywheel (16) in such a way as to simultaneously form the survival magnetic moment and the survival kinetic moment during part at least of the survival mode.

2. Method (50) according to claim 1, **characterised in that**, the satellite (10) comprising several magneto-couplers (15) and a device for measuring the local terrestrial magnetic field, said method comprises steps of:
- (53) determining, according to the measurements of the local terrestrial magnetic field, an internal magnetic moment, termed "damping magnetic moment", to be formed in order to apply a magnetic coupling on said satellite (10) which opposes the variations in the local terrestrial magnetic field in the satellite frame,
- (52) controlling magneto-couplers (15) in such a way as to superimpose the damping magnetic moment on the survival magnetic moment.

3. Method (50) according to one of the preceding claims, **characterised in that** the solar generator (12) being arranged along an axis X of the satellite frame, the survival magnetic moment is parallel to the axis X and the survival kinetic moment is orthogonal to said axis X.

4. Method (50) according to claim 3, **characterised in that**, the solar generator (12) being substantially flat, the survival kinetic moment forms, with said plane of said solar generator, an angle with a non-zero value modulo 90°.

5. Method (50) according to one of claims 1 to 2, **characterised in that**, the ascending node of said orbit being close to noon or to midnight and the solar generator (12) being arranged along an axis X of the satellite frame, the survival magnetic moment is orthogonal to the axis X and the survival kinetic moment is parallel to said axis X.

6. Method (50) according to one of the preceding claims, **characterised in that**, the ascending node of said orbit being close to noon or to midnight, the survival magnetic moment and the survival kinetic moment are predetermined in such a way as to ensure that the photosensitive surface (13) of the solar generator (12) receives sunlight at least twice during one orbit of the satellite (10) .

7. Method (50) according to one of the preceding claims, **characterised in that** the orbit of the satellite (10) is substantially polar.

8. Computer program product **characterised in that** it comprises a set of program code instructions that, when they are executed by a processor, implement a method (50) for supervising attitude according to one of the preceding claims.

9. Satellite (10) in inclined low orbit comprising a solar generator (12), a magneto-coupler (15), an inertial flywheel (16) and a module for controlling the magneto-coupler (15) and the inertial flywheel (16), **characterised in that** the control module comprises a memory in which are stored a non-zero internal magnetic moment setting which is constant in a satellite frame tied to the satellite (10), termed the "survival magnetic moment", and a non-zero internal kinetic moment setting which is constant in said satellite frame, termed the "survival kinetic moment", and **in that** the control module is configured to control, when the satellite (10) is in survival mode, the magneto-coupler (15) and the inertial flywheel (16) in such a way as to simultaneously form the survival magnetic moment and the survival kinetic moment during part at least of the survival mode.

10. Satellite (10) according to claim 9, **characterised in that** it comprises several magneto-couplers (15) and a device for measuring the local terrestrial magnetic field, and **in that** the control module is configured to, when the satellite (10) is in survival mode:
- determine, according to the measurements of the local terrestrial magnetic field, an internal magnetic moment, termed "damping magnetic moment", to be formed in order to apply a magnetic coupling on said satellite (10) suitable for opposing the variations in the local terrestrial magnetic field in the satellite frame,
- control the magneto-couplers (15) in such a way as to superimpose the damping magnetic moment on the survival magnetic moment.

11. Satellite (10) according to one of claims 9 to 10, **characterised in that** the solar generator (12) being arranged along an axis X of the satellite frame, the survival magnetic moment is parallel to the axis X and the survival kinetic moment is orthogonal to said axis X.

12. Satellite (10) according to claim 11, **characterised in that**, the solar generator (12) being substantially flat, the survival kinetic moment forms, with said plane of said solar generator, an angle with a non-zero value modulo 90°.

13. Method (60) for remotely controlling a satellite (10) according to one of claims 9 to 12, **characterised in that**, the orbit of said satellite being drifting, said method comprises, when the satellite (10) is not in survival mode, a recurring step (61) of updating the survival magnetic moment and survival kinetic moment settings stored in the memory of the control module.

14. Method (60) according to claim 13, **characterised in that** the step (61) of updating is executed at each variation in six hours from the solar time of the ascending node of the orbit of the satellite (10).

15. Method (60) according to one of claims 13 to 14, **characterised in that**, the solar generator (12) being substantially flat and the survival kinetic moment forming, with said plane of said solar generator, an angle with a non-zero value modulo 90°, each update consists of an inversion in polarity of the survival magnetic moment and/or an inversion in polarity of the survival kinetic moment.
